# EUROPEAN PATENT SPECIFICATION

(11) **EP 2 686 669 B1**
(45) Date of publication and mention of the grant of the patent: **25.08.2021**
(21) Application number: 12715721.2
(22) Date of filing: 15.02.2012
(51) Int. Cl.: G01N 21/64, G01N 21/85

(54) **METHOD OF MEASURING OF OXYGEN CONTENT IN GAS**
VERFAHREN ZUR MESSUNG DER SAUERSTOFFKONZENTRATION IN GASEN
PROCÉDÉ DE MESURE DE LA TENEUR EN OXYGÈNE DANS UN GAZ

(30) Priority: 15.02.2011 PL 39394211
(43) Date of publication of application: 22.01.2014
(73) Proprietor: Instytut Wysokich Cisnien Polskiej Akademii Nauk, 01-142 Warszawa (PL)
(72) Inventor: LOJKOWSKI, Witold, PL-02-792 Warszawa (PL); GALAZKA, Krzysztof, PL-21-500 Biala Podlaska (PL); OPALINSKA, Agnieszka, PL-96-300 Korytów A (PL); CHUDOBA, Tadeusz, PL-01-318 Warszawa (PL); SWIDERSKA- SRODA, Anna, PL-00-738 Warszawa (PL); MILLERS, Donats, LV-1083 Riga (LV); GRIGORJEVA, Larisa, deceased (LV); SMITS, Krisjanis, LV-1058 Riga (LV)
(74) Representative: Adamczyk, Piotr
(86) International application number: PCT/IB2012/050698
(87) International publication number: WO 2012/110967

(56) References cited:
- EP-B1- 1 920 238
- DE LA ROSA-CRUZ E ET AL: "Luminescent properties and energy transfer in ZrO2:Sm3+ nanocrystals", JOURNAL OF APPLIED PHYSICS, AMERICAN INSTITUTE OF PHYSICS. NEW YORK, US, vol. 94, no. 5, 1 September 2003 (2003-09-01), pages 3509-3515, XP012060139, ISSN: 0021-8979, DOI: 10.1063/1.1599960
- SMITS K ET AL: "Europium doped zirconia luminescence", OPTICAL MATERIALS, ELSEVIER SCIENCE PUBLISHERS B.V. AMSTERDAM, NL, vol. 32, no. 8, 1 June 2010 (2010-06-01), pages 827-831, XP027044419, ISSN: 0925-3467 [retrieved on 2010-05-11]
- REISFELD R ET AL: "Fluorescence study of zirconia films doped by Eu<3+>, Tb<3+> and Sm<3+> and their comparison with silica films", JOURNAL OF ALLOYS AND COMPOUNDS, ELSEVIER SEQUOIA, LAUSANNE, CH, vol. 300-301, 1 April 2000 (2000-04-01), pages 147-151, XP004192529, ISSN: 0925-8388, DOI: 10.1016/S0925-8388(99)00714-8
- RYSZKOWSKA ET AL: "Structure and properties of polyurethane nanocomposites with zirconium oxide including Eu", MATERIALS SCIENCE AND ENGINEERING C, ELSEVIER SCIENCE S.A, CH, vol. 27, no. 5-8, 8 August 2007 (2007-08-08), pages 994-997, XP022190427, ISSN: 0928-4931, DOI: 10.1016/J.MSEC.2006.09.046
- STOJADINOVIC STEVAN ET AL: "Formation and photoluminescence of Eu3+doped zirconia coatings formed by plasma electrolytic oxidation", JOURNAL OF LUMINESCENCE, ELSEVIER BV NORTH-HOLLAND, NL, vol. 176, 17 March 2016 (2016-03-17), pages 25-31, XP029535060, ISSN: 0022-2313, DOI: 10.1016/J.JLUMIN.2016.03.012

## Description

### Technical Field

The present invention relates to method of measuring oxygen content in a gas by measuring a photoluminescence of a sensor which is contacted with the tested gas and which contains nanocrystalline zirconium dioxide.

### Background Art

As used herein, the term photoluminescence shall mean the emission of electromagnetic radiation by atoms or molecules returning to the ground state from the excited state of an electron, into which they were previously induced by the action of radiation of appropriate wavelength. Description of the European patent number EP1920238 discloses a method for determining the oxygen content in a tested gas, by measuring the photoluminescence of a sensor containing nanocrystalline zirconium dioxide. The measurement of the photoluminescence is taken at the time when the sensor is contacted with the tested gas. In the disclosed solution the sensor is illuminated by a pulsed light which excites pulsed photoluminescence whose intensity - dependent on partial pressure of oxygen in the tested gas - is recorded as a function of time. Simultaneously, the sensor temperature is also recorded. The registered intensity of photoluminescence is compared with the calibration results of the sensor for a given temperature. The disadvantage of this known method is a very short decay time of photoluminescence and its relatively low intensity. This requires the use of a strong pulsed light source and a very fast, and thus costly, measurement system. The above-mentioned patent description suggests a possibility of increasing the sensitivity of the sensor by doping zirconium dioxide with rare-earth metal ions or transition metals' ions. There were given no clear guidelines that would prompt a person skilled this art to use a particular method of doping zirconium dioxide, used to manufacture the high sensitivity sensor. Papers E. De La Rosa-Cruz et al "Luminescent properties and energy transfer in ZrO2:Sm3+ nanocystals" (Journal of Applied Physics, American Inst. of Physics, New York, US, vol. 94, no 5, 2003-09-01, pp 3509-3515) and K.Smits et al "Europium doped zirconia luminescence" (Optical Materials, Elsevier Science Publishers B. V., Amsterdam, NL, viol. 32, no. 1, 2010-06-01, pp 827-831*)* describe luminescence properties of zirconia doped with europium, but no oxygen partial pressure/content effect is reported.

### Disclosure of Invention

The purpose of the invention is to modify the known method of measuring which uses photoluminescence of zirconium dioxide in such a way as to enable the use of substantially cheaper electronic components to excite and measure the photoluminescence.

The purpose is fulfilled in a way where a calibrated sensor according the method claim 1 containing zirconium dioxide, characterised by an average crystallite size of less than 60 nm, is contacted with the tested gas, a beam of electromagnetic radiation of essentially constant intensity throughout the measurement is directed onto the sensor. The sensor is heated to a certain temperature and this temperature is maintained during the measurement of radiation-induced photoluminescence of the sensor, and finally the measurement results are compared with the sensor's calibration data. This invention consists in the fact that the sensor uses nanocrystalline zirconium dioxide, doped with Eu3+ ions at a level of 2 to 10% mol, and the measurement of photoluminescence (13) consists in determining the integral of photoluminescence (13) in the band of 580-750 nm corresponding to the area under the photoluminescence spectrum curve in this band.

In one variant of the invention the wavelength of the radiation causing the sensor photoluminescence is in the range from 240 to 570 nm, preferably in the band of 240-270 nm or 390-405 nm.

In another variant of the invention the temperature of the sensor during the measurement ranges from 0°C to 350°C, preferably from 20°C to 150°C.

In yet another variant of the invention there is used zirconium dioxide doped with Eu3+ ions, whose specific surface area is greater than 100m²/g.

Finally, in yet another variant of the invention there is used zirconium dioxide doped with Eu3+ ions in the form of crystallites with an average size of 10 to 20 nm, preferably occurring in tetragonal phase.

Surprisingly, it turned out that the described above europium doped zirconium dioxide increases the sensitivity of the sensor to such an extent, that it became possible to use mass produced and therefore cheap and readily available optoelectric components in the measurement system. Unexpectedly high levels of sensor photoluminescence, 100 to 10,000 times greater than before, also allows for the usage of much smaller than previously quantities of zirconium dioxide, and thus enabling easy measuring device miniaturisation. It was also noticed that it is possible to measure the concentration of oxygen at room temperature, which greatly simplifies the design of the sensor and provides measurable energy savings.

### Brief Description of Drawings

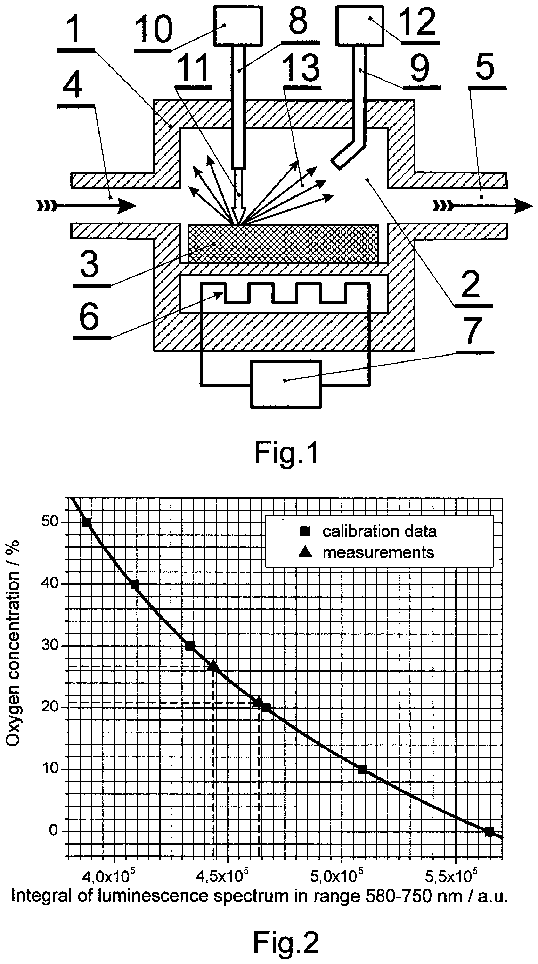

The invention has been shown schematically in exemplary embodiments in the accompanying drawing, where Fig. 1 shows a schematic exemplary device taking a measurement according to the invention while Fig. 2, Fig. 3 and Fig. 4 show calibration curves of the sensors described in the first, second and third embodiment respectively.

### Mode for Carrying out Invention

Exemplary measurements of oxygen content in a gas were carried out using a measuring device shown schematically in Fig. 1. Thermally insulated housing 1 of the device has a measurement chamber 2, in the cavity of which there were placed the sensors 3. The measurement chamber 2 has been fitted with a channel 4 supplying a gas to be tested and channel 5 used to discharge the gas after the measurement has been made. In the housing 1, near the cavity for the sensor 3, there have been placed a resistance heater 6 with a controller 7 of the current flowing through the heater 6 in order to obtain and maintain the selected temperature of the sensor 3 by using a thermometer which is not disclosed in the drawing. Through the housing 1 there were passing two optical fibres 8 and 9 whose initial (inner) ends were placed in the measuring chamber 2, in the immediate vicinity of the sensor 3. On the other (outer) end of the optic fibre 8 there was a LED diode 10, continuously emitting light 11 of wavelength 250 or 405 nm, to induce photoluminescence of the sensor 3. On the other (outer) end of optic fibre 9 there was a photodetector 12 (Spectrometer OceanOptics USB2000+) recording photoluminescence 13 of the sensor material 3. The measurement signal from the photodetector 12 was transferred to an electronic recording-computing device which is not indicated on the drawing.

### Example 1

In order to make a sensor 3 there was weighed 150 mg of zirconium dioxide doped with Eu3+ ions at the level of 10% mol. Zirconium dioxide was in the form of nanopowder characterised by the average crystallite size, determined by Scherrer method on the basis of the record of X-ray diffraction, of 10 nm. The specific surface area of such nanopowder determined by the BET method amounted to 159 m²/g. Then the weighed amount of nanopowder was placed in a cylindrical matrix of inner diameter 5 mm, whereupon there was inserted a cylindrical punch of the same diameter into the matrix. As a result of axial pressing of the punch into the matrix, with a manual press generating pressure of 100 MPa, there was made permanent nanopowder compaction, giving it the form of a disc with a diameter of 5 mm and a height of 1.2 mm. The disc made of zirconium dioxide extracted from the matrix, was the sensor 3 which was placed in the cavity of the measurement chamber 2. After powering up the heater 6 the temperature of the sensor 3 reached and maintained 110°C. Sensor 3 calibration was then carried out by measuring its photoluminescence 13 induced by light 11 of a wavelength of 405 nm emitted by the LED diode 10. Measurements of sensor's photoluminescence were taken for reference gases introduced to chamber 2, which were mixtures of oxygen and nitrogen, while the proportion of oxygen in the mixture varied from 0 to 50%, in increments of 10%. Photoluminescent radiation 13 was recorded in the band from 580 to 750 nm, in which there are peaks of the europium's emission spectrum. After performing forty consecutive recordings of photoluminescence lasting 250 ms each, for each of the six reference concentration levels the results were averaged and there were calculated the integrals corresponding to the area under the photoluminescence spectrum curve in the tested range (580-750 nm). This way there were obtained six calibration points, and on their basis, by using the Levenberg-Marquardt algorithm, there was numerically determined the calibration curve in a rectangular coordinate system in which the axis of abscissae represents the value of the integral calculated from the recorded photoluminescence spectrum of the sensor and the axis of ordinates - the concentration of oxygen in the tested gas. The resulting calibration curve and the measurement points on which it is based are shown in the graph (Fig. 2). Similar calibration curves can be made for other temperatures of the sensor 3. After finishing the calibration, there were carried out at the temperature of 110°C, two measurements of photoluminescence in the presence of gases in the chamber 2 with two concentrations of oxygen, which differ from each other and are different from the above reference gas concentrations. After plotting the obtained measurement points on the said graph there was observed a very high accuracy of the measurement method according to the invention (Fig.2). After confirming the correctness of the calibration curve, the recording-computing device was supplemented by a module that allows to display on a screen a specific oxygen concentration corresponding to the currently recorded photoluminescence of the sensor 3, resulting from the oxygen content in the analysed gas.

### Example 2

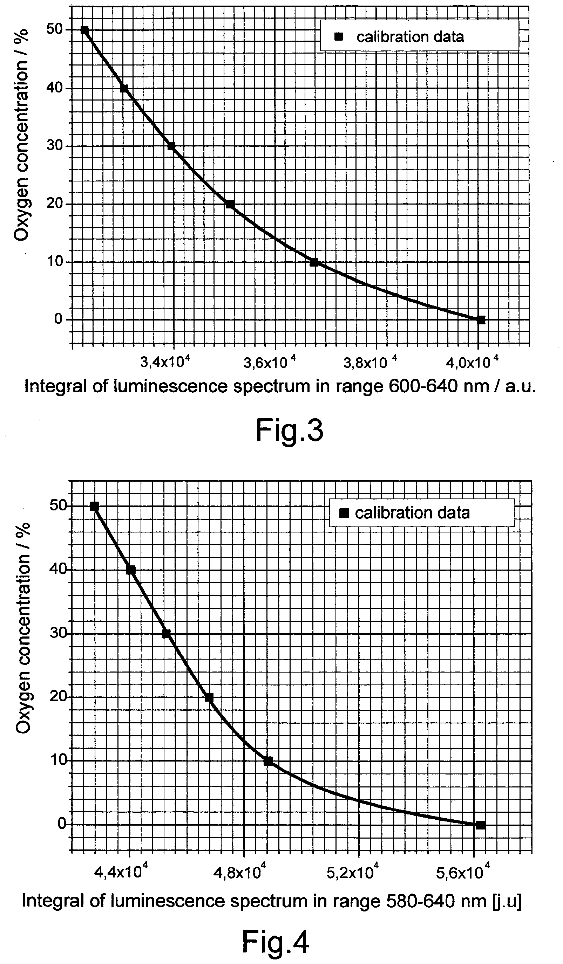

There was prepared a second sensor (3) in the form of a thin layer of zirconium dioxide, 0.1 mm thick, pressed under pressure of 100 MPa onto a flat metal substrate. The nanocrystalline zirconium dioxide used to make this sensor was doped with Eu3+ ions at 8% mol in tetragonal phase and was characterised by an average crystallite size of 9 nm. The specific surface area of this powder determined by the BET method amounted to 118 m²/g. The second sensor (3) was placed in the measuring chamber 2, followed by a calibration procedure for the same as in the first example reference gases, for the same temperature and for the same wavelength of light inducing photoluminescence. However, photoluminescent radiation was recorded only in the range from 600 to 640 nm, in which there are two main peaks of Eu ions' emission spectrum. After performing a hundred recordings of photoluminescence lasting 10 ms each for each of the reference concentrations, the obtained results were averaged. With the same numerical methods as previously, from the obtained calibration points there was calculated the calibration curve, shown in Fig. 3. Measurements of oxygen concentration according to the invention carried out with thus calibrated sensor, yielded results which were very similar to those on the calibration curve.

### Example 3

There was prepared a third sensor (3) analogous to the one in the second example, but it had been made with nanopowder characterised by an average crystallite size of 10 nm. The specific surface area of this powder determined by the BET method amounted to 105 m²/g. In the measuring device, in whose chamber 2 was placed a third sensor (3), there was installed a LED diode 10, emitting light of the wavelength of 250 nm. Then, after the sensor (3) has reached the temperature of 22°C there was carried out the calibration procedure for the same as in the previous examples six reference gases. Photoluminescent radiation of the sensor was recorded in the band 580-640 nm, in which there are three peaks of Eu ions' emission spectrum. After taking twenty recordings lasting 100 ms each for every reference concentration, the obtained results were averaged and, analogously as in the previous examples, there was calculated the calibration curve shown in Fig. 4. The measurements of oxygen concentration taken with thus calibrated third sensor according to the invention also yielded results very similar to those on the calibration curve.

To induce photoluminescence of the sensor, in addition to the LED diodes (10) used in the examples above, it is possible to use deuterium or helium lamp with monochromator, LED diodes with wavelengths of 240, 260, 270, 295, 310, 340 and 375 nm, and blue 401 nm laser, operating in continuous mode.

## Claims

1. A method of measuring of oxygen content in a gas by measuring of a photoluminescence (13) of a calibrated sensor (3) contacted with tested gas, wherein the sensor (3), containing nanocrystalline zirconium dioxide with an average size of the crystallites no greater than 60 nm, is heated to a specific temperature and is kept in this temperature during the measurement, a beam (11) of electromagnetic radiation causing the sensor's photoluminescence (13) and having essentially constant intensity during the measurement is directed onto the sensor (3), the resulting photoluminescence (13) of the sensor (3) is measured, and then the measurement result is compared with the sensor's calibration data, and in the sensor (3) there is used nanocrystalline zirconium dioxide doped with Europium Eu3+ ions at the level of 2 to 10% mol, and the measurement of photoluminescence (13) consists in determining the integral of photoluminescence (13) in the band of 580-750 nm corresponding to the area under the photoluminescence spectrum curve in this band.

2. The method according to claim 1, **characterised in that** the wavelength of the radiation (11) which causes photoluminescence of the sensor (3) is within the range of 240 to 570 nm.

3. The method according to claim 2, **characterised in that** the wavelength of the radiation (11) which causes photoluminescence (13) of the sensor (3) is within the range of 240 to 270 nm.

4. The method according to claim 2, **characterised in that** the wavelength of the radiation (11) which causes photoluminescence (13) of the sensor (3) is within the range of 390 to 405 nm.

5. The method according to one of claims from 1 to 4, **characterised in that** the integral of photoluminescence (13) is determined for the band of 600-640 nm.

6. The method according to one of claims from 1 to 5, **characterised in that** the sensor's (3) temperature during the measurement is within the range of 0°C to 350°C.

7. The method according to claim 6, **characterised in that** the sensor's (3) temperature during the measurement is within the range of 20°C to 150°C.

8. The method according to one of claims from 1 to 7, **characterised by** using zirconium dioxide doped with Eu3+ ions, whose specific surface area is greater than 100m²/g.

9. The method according to one of claims from 1 to 8, **characterised by** using zirconium dioxide doped with Eu3+ ions in the form of crystallites of an average size from 10 to 20 nm, preferably occurring in tetragonal phase.

## Patentansprüche

1. Ein Verfahren zur Messung des Sauerstoffgehalts in einem Gas durch Messung der Photolumineszenz (13) eines kalibrierten Sensors (3), der mit dem getesteten Gas in Kontakt steht, wobei der Sensor (3), der nanokristallines Zirkondioxid mit einer durchschnittlichen Größe der Kristallite von nicht mehr als 60 nm enthält, auf eine bestimmte Temperatur erhitzt und während der Messung auf dieser Temperatur gehalten wird; ein Strahl (11) elektromagnetischer Strahlung, der die Photolumineszenz des Sensors (13) verursacht und während der Messung eine im Wesentlichen konstante Intensität aufweist, wird auf den Sensor (3) gerichtet; die resultierende Photolumineszenz (13) des Sensors (3) und anschließend wird das Messergebnis mit den Kalibrierdaten des Sensors verglichen; und im Sensor (3) wird nanokristallines Zirkondioxid- verwendet, dotiert mit Europium Eu3+-lonen in einer Konzentration von 2 bis 10 % mol; und die Messung der Photolumineszenz (13) besteht darin, das Integral der Photolumineszenz (13) im Band von 580-750 nm entsprechend der Fläche unter der Photolumineszenz-Spektrumskurve in diesem Band zu bestimmen.

2. Das Verfahren nach Anspruch 1 **dadurch gekennzeichnet, dass** die Wellenlänge der Strahlung (11), die die Photolumineszenz (13) des Sensors (3) verursacht, im Bereich von 240 bis 570 nm liegt.

3. Das Verfahren nach Anspruch 2 **dadurch gekennzeichnet, dass** die Wellenlänge der Strahlung (11), die die Photolumineszenz (13) des Sensors (3) verursacht, im Bereich von 240 bis 270 nm liegt.

4. Das Verfahren nach Anspruch 2 **dadurch gekennzeichnet, dass** die Wellenlänge der Strahlung (11), die die Photolumineszenz (13) des Sensors (3) verursacht, im Bereich von 390 bis 405 nm liegt.

5. Das Verfahren nach einem der Ansprüche 1 bis 4 **dadurch gekennzeichnet, dass** das Integral der Photolumineszenz (13) für das Band von 600-640 nm bestimmt wird.

6. Das Verfahren nach einem der Ansprüche 1 bis 5 **dadurch gekennzeichnet, dass** die Temperatur des Sensors (3) während der Messung im Bereich von 0°C bis 350°C liegt.

7. Das Verfahren nach Anspruch 6 **dadurch gekennzeichnet, dass** die Temperatur des Sensors (3) während der Messung im Bereich von 20 °C bis 150 °C liegt.

8. Das Verfahren nach einem der Ansprüche 1 bis 7 **durch** die Verwendung von dem mit Eu3+-lonen dotierten Zirkoniumdioxid **gekennzeichnet**, dessen spezifische Oberfläche größer als 100 m²/g ist.

9. Das Verfahren nach einem der Ansprüche 1 bis 8 **durch** die Verwendung von dem mit Eu3+-lonen dotierten Zirkoniumdioxid in Form von Kristalliten einer mittleren Größe von 10 bis 20 nm, vorzugsweise in tetragonaler Phase, **gekennzeichnet**.

## Revendications

1. Une méthode de mesure de la teneur en oxygène dans un gaz par mesure de la photoluminescence (13) d'un capteur étalonné (3) mis en contact avec le gaz testé, où le capteur (3), contenant du dioxyde de zirconium nanocristallin dont la taille moyenne des cristallites n'est pas supérieure à 60 nm, est chauffé à une température spécifique et est maintenu à cette température pendant la mesure, un faisceau (11) de rayonnement électromagnétique provoquant la photoluminescence du capteur (13) et ayant une intensité essentiellement constante pendant la mesure est dirigé sur le capteur (3), la photoluminescence (13) résultante du capteur (3) est mesurée, et ensuite le résultat de la mesure est comparé aux données d'étalonnage du capteur, et dans le capteur (3) il est utilisé le dioxyde de zirconium nanocristallin dopé avec des ions d'europium Eu3+ à raison de 2 à 10 % mol, et la mesure de la photoluminescence (13) consiste à déterminer l'intégrale de la photoluminescence (13) dans la bande de 580-750 nm correspondant à l'aire sous la courbe spectrale de photoluminescence dans cette bande.

2. La méthode suivant la revendication 1, **caractérisée en ce que** la longueur d'onde du rayonnement (11) qui provoque la photoluminescence du capteur (3) est comprise entre 240 et 570 nm.

3. La méthode suivant la revendication 2, **caractérisée en ce que** la longueur d'onde du rayonnement (11) qui provoque la photoluminescence (13) du capteur (3) est comprise entre 240 et 270 nm.

4. La méthode suivant la revendication 2, **caractérisée en ce que** la longueur d'onde du rayonnement (11) qui provoque la photoluminescence (13) du capteur (3) est comprise entre 390 et 405 nm.

5. La méthode suivant une des revendications de 1 à 4, **caractérisée en ce que** l'intégrale de la photoluminescence (13) est déterminée pour la bande de 600-640 nm.

6. La méthode suivant une des revendications de 1 à 5, **caractérisée en ce que** la température du capteur (3) pendant la mesure est comprise entre 0 °C et 350 °C.

7. La méthode suivant la revendication 6, **caractérisée en ce que** la température du capteur (3) pendant la mesure est comprise entre 20°C et 150°C.

8. La méthode suivant une des revendications de 1 à 7, **caractérisée par** l'utilisation du dioxyde de zirconium dopé avec des ions d'Eu3+ dont la surface spécifique est supérieure à 100 m²/g.

9. La méthode suivant une des revendications de 1 à 8, **caractérisée par** l'utilisation du dioxyde de zirconium dopé avec des ions d'Eu3+ sous forme de cristallites d'une taille moyenne de 10 à 20 nm, se présentant de préférence en phase tétragonale.
